# EUROPEAN PATENT SPECIFICATION

(11) **EP 0 593 123 B1**
(45) Date of publication and mention of the grant of the patent: **07.01.1998**
(21) Application number: 93202851.7
(22) Date of filing: 07.10.1993
(51) Int. Cl.: A23P 1/08, A23J 3/18, A23C 19/16

(54) **Method of preparing a foil or coating on the basis of water insoluble proteins**
Verfahren zur Herstellung einer Folie oder Beschichtung auf der Basis von wasserunlöslichen Proteinen
Procédé pour la fabrication d'une feuille ou d'une composition de revêtement, basée sur des protéines insolubles dans l'eau

(30) Priority: 16.10.1992 NL 9201805
(43) Date of publication of application: 20.04.1994
(73) Proprietor: LATENSTEIN ZETMEEL B.V., NL-6541 AJ Nijmegen (NL)
(72) Inventor: Kolster, Peter, NL-6721 RV Bennekom (NL); Kuiper, Harald John, NL-7546 BK Enschede (NL); Tigelaar, Hendrik, NL-3871 CM Hoevelaken (NL); Vereijken, Johannes Maria, NL-6721 TV Bennekom (NL)
(74) Representative: Land, Addick Adrianus Gosling

(56) References cited:
- EP-A- 0 244 661
- WO-A-91/06227
- WO-A-92/01394
- US-A- 3 925 343
- US-A- 4 016 337
- US-A- 4 179 525
- DATABASE WPI Section Ch, Week 7314, 1973 Derwent Publications Ltd., London, GB; Class D, AN 73-19542U & JP-A-48 000 945 (ASAHI CHEMICAL IND. CO. LTD.)
- DATABASE WPI Section Ch, Week 9129, Derwent Publications Ltd., London, GB; Class D, AN 91-210709 & JP-A-3 131 636 (OKURA INDUSTRIAL KK) 5 June 1991

## Description

The present invention relates to a method for manufacturing a foil or coating and to the foils or coatings obtained in this way. The invention further relates to an instant mixture for manufacturing such foils and coatings.

Coatings of natural materials such as proteins are for instance particularly suitable as edible protection for foodstuffs such as vegetables, fruit and the like against among other things moisture loss or damage. For biodegradable foils applications can also be found for instance in the packaging industry.

Coatings or foils based on water-insoluble proteins such as for instance wheat gluten have already been described in the literature. Such known coatings or foils are formed from a suspension of wheat gluten in a mixture of an organic solvent, such as ethanol, and water at an acid or alkaline pH. The said steps are supposedly necessary to provide the suspension with good layer-forming properties.

The use of organic solvents and an acid or alkaline pH on or close to foodstuffs is however often undesirable. In addition, organic solvents are expensive, damaging to health and environmentally harmful. Organic solvents also entail safety risks.

Surprisingly, it has now been found that it is possible to manufacture a foil or coating based on unfractionated gluten by mixing the gluten with water.

The invention therefore provides a method of manufacturing a foil or coating based on unfractionated gluten comprising the steps of:
a) preparing a suspension by adding unfractionated gluten, in a finely distributed way, to water which is essentially continuously stirred;
b) spreading the obtained suspension on a support; and
c) removing the water from the suspension to obtain a continuous layer.

Foils containing gluten are known from EP-0 244 661. These foils do however contain collagen as their main constituent, whereas gluten are only used as an additive.

In the method of the present invention the suspension preferably contains at least one additive, chosen from the group consisting of thickeners, plasticizers, acids, proteins, hydrophobic substances or combinations thereof.

The proteins used as additives can be of both vegetable and animal origin or combinations thereof.

Preferably used as vegetable proteins which are naturally water-insoluble or made water-insoluble are proteins from cereals such as for instance wheat, maize, barley, rye, millet etc., proteins from tuberous plants such as for instance potatoes, proteins from pulses such as soya, peas, beans, broad beans etc., or combinations thereof.

Suitable as animal proteins are naturally water-insoluble proteins or proteins made water-insoluble such as collagen, gelatin, lactoproteins, egg proteins and blood proteins or combinations thereof.

Most of the said proteins are edible and therefore very suitable for use on, in or round foodstuffs.

A number of requirements are made of the suspension prepared according to the invention. For practical reasons the suspension must be stable. This means that the gluten and additional proteins must not settle and/or must remain capable of resuspension. The stability of the suspension can be improved by adding additives such as thickeners, acids, proteins or combinations thereof.

The ways of applying the suspension to a support and of making a foil also make particular demands of the rheological behaviour of the suspension. The rheological behaviour can, like the stability, be adapted to requirements by adding thickeners, acids, proteins or combinations thereof.

The properties of the obtained coatings and foils, such as mechanical properties (stretch, strength etc.) and gas-, fat- and/or water permeability, aroma, colour and taste can likewise be controlled by adding the correct additives such as thickeners, plasticizers, proteins, hydrophobic substances, aromatic substances, colorants and flavourings. The hydrophobic substances are for instance very suitable for limiting the moisture permeability of a foil or coating. The physical conditions during making of the suspension and making of the foil or coating also influence the properties of the foils and coatings. Examples of physical conditions are temperature and duration of a possible heating.

The additives can be added both before and after the addition of the protein to the water. It is likewise possible to mix the additives with the protein prior to suspension thereof in water.

Proteins are suitable for stabilizing the suspension and for adapting the rheological behaviour thereof. The proteins can be selected for instance from the group consisting of water-soluble proteins such as modified wheat gluten, casein, gelatin or combinations thereof.

The addition of acids can likewise improve the stability and the rheological behaviour of the suspension. Such acids can be selected from the group consisting of inorganic acids such as hydrochloric acid, phosphoric acid, or organic acids such as lactic acid, citric acid or combinations thereof.

Thickeners are likewise suitable for influencing the stability and the rheological behaviour of the suspensions. The thickener is preferably selected from the group consisting of modified cellulose, such as carboxymethyl cellulose (further referred to as CMC), or from other modified or non-modified polysaccharides such as locust bean gum, guar gum, gum arabic, xanthane gum, alginate, starch or combinations thereof.

Thickeners also have other advantages. It has been found that a suspension of for instance only water and gluten cannot be applied to a substrate by means of rubbing or brushing because lumps then result. When a thickener is added to the suspension, the applying of the suspension by means of rubbing or brushing then does become possible. In preference the thickener is guar gum and it is added in a concentration of at least 2% by weight in relation to the protein.

Plasticizers are used to make the foils and coatings flexible. The plasticizer can be chosen for instance from the group consisting of fatty acids, fatty acid derivatives, phthalates, sebacates, citrates, high-molecular alcohols, triethanolamine, lactamides, phospholipids, mono-, di-, and oligosaccharides, acids, polyoles or derivatives thereof such as polyethylene glycol, polyethylene glycol esters, propylene glycol, glycerol, diglycerol, 1,2,6-hexanetriole, sorbitol, mannitol, saccharose, mono- and di-glycerides or combinations thereof. Other examples can be found in Giam et al., J. of Food Prot. 50(9), 769-782 (1987). In a preferred embodiment the plasticizer is a food-compatible and/or degradable substance such as glycerol, and this is added preferably in a concentration between 0 and 45% (v/w), more preferably in a concentration between 5 and 30%.

Hydrophobic substances are used to reduce the moisture permeability of the foils or coatings. They are chosen for instance from oils, fats, waxes, emulsifiers or combinations thereof.

The water from the suspension is removed preferably by drying in air at a temperature between 0 and 100°C, or under vacuum, by means of electromagnetic waves such as infrared or microwaves, by means of drying means or in other ways.

In addition to the method the invention further provides foils and coatings whereof the properties, as already stated above, can be adapted to a desired application by a suitable choice of additives. A usable foil or coating can however already be obtained starting from only water and (wheat) gluten.

Flat foils can be manufactured in simple manner by means of pouring the suspension onto an inert support. Such foils can be used among other things as replacement for known packaging materials. Foils can however also be pre-shaped. When the suspension is for example extruded, a casing for use in for instance sausage making can be obtained.

Coatings are applied by pouring, spraying, immersion, brushing, rubbing or in any other manner.

The foils and coatings according to the invention can be used for different applications. Examples hereof are: limiting the fat and/or moisture migration in a food product consisting of portions with a mutually differing fat and/or moisture content; controlling the emission and absorption of moisture, fat and/or gas respectively from and by products; forming a protection for products to prevent spoiling, dehydration, damage and the like; use as packaging foil or bioplastic. Chemical agents such as pesticides, fungicides, bactericides etc. can optionally be added.

Specific examples of applications are: arranging a coating round flower bulbs, seeds, foodstuffs such as cheese, vegetable, fruit etc.; preventing fat and/or moisture migration inside a food product consisting of a number of portions, such as for instance a tart base and filling; making packaging materials such as paper and cardboard less water-sensitive by applying a coating thereto; as foil between meat products etc.

The foils and coatings are preferably not only edible but also biodegradable and therefore very environmentally-friendly. This particularly important for foils used as packing materials or for coatings of packing material.

The invention further provides an instant product for preparing a suspension by sole addition of water which can be used in the method according to the invention. In addition to the gluten the instant product also comprises at least one thickener and can furthermore contain one or more of the above mentioned additives. The instant mix preferably contains wheat gluten as the water-insoluble material, glycerol as plasticizer and guar gum as thickener.

The present invention will be further elucidated on the basis of a number of examples. By the word "film" used in the examples is meant a coating as well as a casing and a foil. The examples are focused on wheat gluten but can be embodied in analogous manner for other gluten.

### MATERIALS AND METHODS

### 1. Manufacture of a base suspension.

A base suspension contains only a protein, such as gluten, and water. For preparation of a base suspension based on gluten the gluten is dispersed in water slowly and distributed finely using a sieve while being stirred continuously with an overhead stirring device (470 rpm). After addition of the gluten to the water the suspension is heated to 70°C during stirring with an overhead stirring device (160 rpm) to de-aerate the suspension and then stirred continuously for 10 minutes. The base suspension is thus obtained.

The basic formula contains 2.2 g gluten per 20 ml water.

### 2. Additives

It has been found that additives such as hydrophobic substances, thickeners, plasticizers, acids and other proteins can be added to the water both before and after the gluten. If desired the additives can be mixed with the gluten before the gluten is dispersed in water.

The quantity of additive is given hereinbelow as percentage relative to the quantity of gluten (w/w for solids, v/w for liquids).

In the following examples glycerol is added to the water before the gluten. The glycerol used is of p.a. quality (87% pure, density 1.23 kg/l).

### 3. Manufacture of films

In order to form a coating the produced suspensions are applied by means of known methods such as immersion, spraying, rubbing and brushing. After evaporation of the water a continuous film results. To obtain a foil the suspension is poured onto an inert support to which the obtained film does not adhere permanently.

### 4. Used test methods

To study the properties of the films the suspensions (standard 120 ml) are poured into polystyrene trays (standard dimensions 20 x 20 x 1 cm (1 x w x h). After drying a film of roughly 0.3 mm thickness is thus obtained. The drying time of the suspensions depends on the temperature. In a ventilated oven at 60°C the gluten suspensions in the above mentioned polystyrene trays are dry in about 3 hours. In a conditioned space at 20°C and 60% relative air humidity (RAH) this takes 2 days. In a number of examples the films are dried at other temperatures. Before measurements are made on the films they are conditioned for a minimum of 24 hours in the conditions (temperature and relative air humidity) under which the experiments are performed.

The mechanical properties are determined with an "Instron Universal Testing Machine" (type 4301) at 20°C and 60% RAH. Using a cutting template (halter model) which is derived from NEN-ISO norm 1184, test strips are cut with a portion for measurement the length of which is 70 mm and the width 30 mm. The thickness of the test strip is defined as the average of a minimum of four measurements per test strip. The distance between the pneumatic clips of the Instron is 70 mm. The parameters shown are stress (maximum force per surface area of the cross section), strain (maximum elongation as a percentage compared to starting length) and Young's modulus.

The obtained data is analyzed statistically. In the tables the lowest significant differences (LSD) are shown at a significance level of 5%.

### EXAMPLE 1

### Effect of plasticizers.

To give inter alia flexibility to films of polymers plasticizers are added. Following this known process for polymers, glycerol is added in the experiment described below as food-compatible plasticizer to gluten suspensions.

The suspensions are prepared according to the basic formula described under Materials and methods. The results are shown in table 1.

**Table 1**

| Mechanical properties of gluten films in relation to the glycerol concentration. | | | | | | | | | | |
|---|---|---|---|---|---|---|---|---|---|---|
| | Glycerol concentration (%) | | | | | | | | | |
| | 0 | 15 | 19 | 23 | 27 | 31 | 35 | 39 | 43 | LSD |
| Thickness (mm) | 0.30 | 0.29 | 0.34 | 0.3 | 0.32 | 0.33 | 0.34 | 0.34 | 0.37 | 0.07 |
| Stress (MPa) | 5.70 | 2.73 | 1.42 | 0.59 | 0.53 | 0.42 | 0.41 | 0.31 | 0.25 | 0.57 |
| Strain (%) | 11 | 147 | 275 | 489 | 488 | 627 | 639 | 612 | 611 | 118 |
| Modulus (MPa) | 295 | 94 | 37 | 3.1 | 3.4 | 1.2 | 1.9 | 1.5 | 1.0 | 27.2 |

This experiment demonstrates that the mechanical properties of films based on gluten can be manipulated by adding a plasticizer, in this example glycerol.

### EXAMPLE 2

### Effect of thickeners.

The formed suspensions must preferably be stable. The stability, that is, the degree to which the suspension settles, and the rheological properties of the gluten suspensions can be adapted by adding thickeners. In this example the thickeners are added beforehand to the gluten.

The suspension stability is defined in a test tube of 20 ml as the settling (in cm) of 10 ml suspension 24 hours after preparation thereof. Table 2 shows the settling with addition of 3% thickener.

**Table 2**

| Settling of gluten suspensions with 3% added thickeners | |
|---|---|
| Thickener | Settling (cm) |
| locust bean gum | 3 |
| guar gum | 3 |
| gum arabic | 4 |
| xanthane gum | 4 |
| alginate | 4 |
| CMC low viscous | 5 |
| CMC medium viscous | 4 |
| CMC high viscous | 4 |

This example demonstrates that aqueous gluten suspensions can be stabilized with different thickeners.

The effect of adding the thickeners CMC (high viscous) and guar gum to gluten suspensions on the mechanical properties of the films poured herefrom is also determined.

Gluten films are made without thickener, with CMC high viscous (4 or 8%) or with guar gum (5 or 8%). The gluten suspension according to the basic formula is used, with however addition of 30% glycerol. The films are dried at 20°C and 60% RAH. The results are shown in table 3.

**Table 3**

| Mechanical properties of films with thickeners | | | | | | |
|---|---|---|---|---|---|---|
| | control | 4% CMC | 8% CMC | 5%guargum | 8%guargum | LSD |
| Thickness (mm) | 0.31 | 0.36 | 0.37 | 0.37 | 0.39 | 0.04 |
| Stress (MPa) | 0.55 | 1.18 | 1.21 | 0.54 | 0.60 | 0.16 |
| Strain (%) | 655 | 255 | 215 | 323 | 186 | 55 |

It can be seen from this example that thickeners can influence the mechanical properties of the films.

### EXAMPLE 3

### Effect of the pH of gluten suspensions.

The stability and the rheological properties of gluten suspensions can be changed by lowering the pH. The pH of the gluten suspension prepared in accordance with the basic formula is lowered with different acids.

### 3.1. Stability

The suspension stability is defined in the same way as in example 2. In order also to determine the effect of acidification on suspensions already stabilized by means of thickeners, suspensions to which guar gum (8%) or high viscous CMC (5%) are added are also acidified with HCl. In defining the stability it is found that after a period of time some acidified gluten suspensions rise (clear liquid at the bottom) instead of settling (clear liquid at the top). The results are shown in table 4.

**Table 4**

| Settling of acidified gluten suspensions (in cm) | | | | | | | |
|---|---|---|---|---|---|---|---|
| Additives | control | pH 4.5 | pH 4 | pH 3.5 | pH 3 | pH 2.5 | pH 2 |
| HCL | 5 | 2 | 2.5* | 2.5* | 0 | 0 | 2* |
| CMC + HCL | 0 | 0 | 4* | 4* | 4* | 4* | 0 |
| Guar + HCL | 0 | 0 | 0 | 0 | 0 | 0 | 0 |
| Phosphoric acid | 5 | 0.5 | 0.5 | 0.5 | 0 | 0 | - |
| Citric acid | 5 | 4.5 | 3 | 2* | 1* | 0.5* | - |
| Lactic acid | 5.5 | 2* | 0 | 0 | 0 | 0 | - |

| | | | | | | | |
|---|---|---|---|---|---|---|---|
| * = "rising". Height at t = 0: 10 cm. CMC = 5% CMC high viscous, Guar = 8%, guar gum: no observation. | | | | | | | |

The degree of stability depends on the type of acid and the pH.

### 3.2. Viscosity (rheological properties)

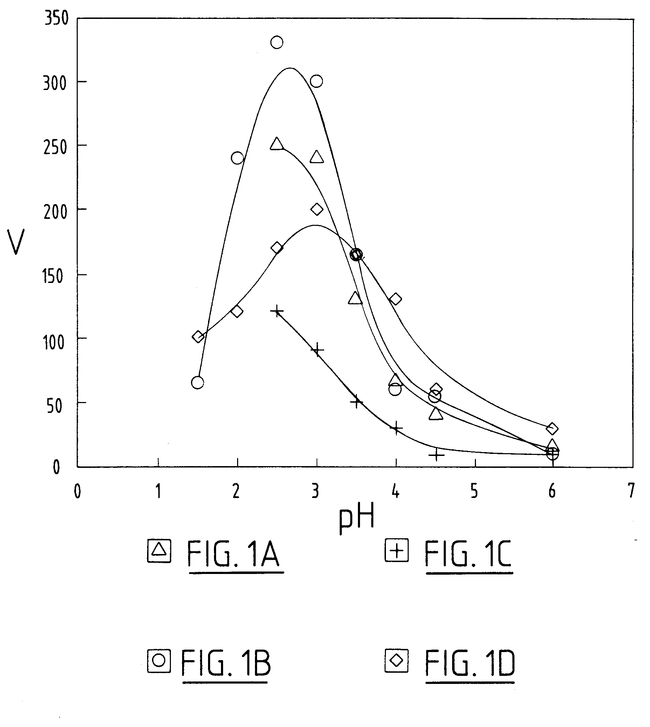

Fig. 1 shows the viscosity (V in cP) of the suspensions measured with an Epprecht viscosimeter as a function of the pH. Different acids are used for the acidification. In the graph figure 1A shows the curve for lactic acid, figure 1B the curve for phosphoric acid, figure 1C the curve for citric acid and figure 1D the curve for hydrochloric acid. It can be seen from the graph in figure 1 that there are clear differences in viscosity between the suspensions acidified with different acids.

It can be seen from this experiment that the stability and rheological properties of gluten suspensions can be changed by adapting the Ph, wherein the effect depends on the type of acid.

### EXAMPLE 4

### Effect of temperature.

### 4.1. Drying temperature

In a first experiment the effect of the drying temperature on the mechanical properties of the films was determined. Suspensions (basic formula with 30% glycerol) are dried at 20, 60, 80 or 100°C. The drying times are respectively 48, 3, 1.5 and 1 hour. The results are shown in table 5.

**Table 5**

| The influence of the drying temperature on the mechanical properties. | | | | | |
|---|---|---|---|---|---|
| | Drying temperature | | | | |
| | 20°C | 60°C | 80°C | 100°C | LSD |
| Thickness (mm) | 0.33 | 0.35 | 0.38 | 0.39 | 0.032 |
| Stress (MPa) | 0.57 | 0.61 | 0.88 | 1.11 | 0.17 |
| Strain (%) | 492 | 598 | 486 | 399 | 73 |
| Modulus (MPa) | 6.1 | 4.7 | 2.8 | 5.4 | 4.0 |

This experiment demonstrates that the drying temperature has a clear influence on the mechanical properties of the films.

### 4.2. Storage temperature

In a second experiment the effect of the storage temperature of the films is determined. The films are poured from suspensions according to the basic formula with 30% glycerol and dried at 20°C and 60% relative humidity. They are then stored at 20°C or 80°C. The results are shown in tables 6 and 7.

**Table 6**

| Mechanical properties of films in relation to storage duration at 20°C. | | | | | | | |
|---|---|---|---|---|---|---|---|
| | Storage duration (number of days) | | | | | | LSD |
| | 0 | 7 | 14 | 28 | 42 | 49 | |
| Thickness (mm) | 0.30 | 0.29 | 0.31 | 0.31 | 0.32 | 0.31 | 0.02 |
| Stress (MPa) | 0.63 | 0.85 | 0.64 | 0.51 | 0.47 | 0.50 | 0.13 |
| Strain (%) | 617 | 501 | 547 | 606 | 617 | 521 | 79 |
| Modulus (MPa) | 2.6 | 5.5 | 4.3 | 2.1 | 1.4 | 1.4 | 1.4 |

**Table 7**

| Mechanical properties of films in relation to storage duration at 80°C. | | | | | |
|---|---|---|---|---|---|
| | Storage duration (hours) | | | | LSD |
| | 0 | 3 | 12 | 24 | |
| Thickness (mm) | 0.31 | 0.33 | 0.31 | 0.32 | 0.04 |
| Stress (MPa) | 0.46 | 0.55 | 0.68 | 0.87 | 0.23 |
| Strain (%) | 487 | 487 | 320 | 284 | 96 |
| Modulus (MPa) | 4.1 | 3.8 | 4.5 | 7.0 | 1.7 |

This experiment shows that the storage temperature can have an effect on the mechanical properties of the films.

It can be seen from these experiments that heating the suspension as well as the film is a method of changing the mechanical properties of the films.

### EXAMPLE 5

### Tearing resistance of gluten films.

In this experiment the tearing resistance was determined (in accordance with norm NEN-ISO 6383-2) of gluten films prepared according to the basic formula with different quantities of glycerol added thereto. The suspensions are dried at 60°C. The measurement is performed at 20°C, 60% RAH. The dimensions of the strips of gluten film used are 63 x 75 x 0.3 mm (w x l x d). 8 strips are measured per treatment. Prior to determining the tearing resistance a 20 mm deep notch is made halfway along the strip (37.5 mm).

**Table 10**

| Tearing resistance of gluten films. | |
|---|---|
| Glycerol (%) | Tearing resistance (cN) |
| 5 | 1 |
| 10 | 19 |
| 15 | 80 |
| 20 | 141 |
| 25 | 220 |
| 30 | 285 |
| 35 | 154 |

This example shows that the tearing resistance can be changed by changing the composition of the gluten films.

### EXAMPLE 6

### Moisture permeability of gluten films.

The moisture permeability of the gluten films is determined with a modified version of the ASTM method (ASTM 1983, method 15.09:E96). Stretched over an aluminium weighing box with 20-25 g of the desiccant CaSO₄ is a gluten film which is fixed in airtight manner on the box with bees wax. The surface area of the film is 15.9 cm², the thickness 0.3 mm. After weighing, the whole is placed in an exsiccator having on the bottom a saturated ammonium sulphate solution. The whole is placed at 20°C. At this temperature there results in the exsiccator outside the box a relative air humidity of 81% (Handbook of Chemistry and Physics, 65th edition, page E-42). Inside the box the theoretical RAH is 0%. the moisture permeability of the gluten films is defined as the weight increase in 48 hours of the weighing boxes with desiccant and film. In the experiment different amounts of glycerol are added to gluten suspensions which are prepared in accordance with the basic formula. The films are dried at 60°C.

This experiment demonstrates that the moisture permeability of the gluten films can be controlled by adapting the amount of additive, in this case glycerol.

**Table 9**

| Moisture permeability of gluten films in relation to the glycerol concentration. | |
|---|---|
| Glycerol (%) | Weight increase (g) |
| 15 | 0.086 |
| 20 | 0.095 |
| 25 | 0.162 |
| 35 | 0.268 |
| 45 | 0.458 |

### EXAMPLE 7

### Instant products.

In this experiment an instant product is prepared. An instant product must, when water is added (or vice-versa), provide without intensive stirring a homogeneous suspension without coarse particles or formation of lumps. The forming of such an instant product is not possible with only gluten. This experiment therefore determines which additives are necessary to obtain a good instant product.

The instant properties of samples are determined by placing 5 ml water adjacently of 0.5 g sample with a pipette, allowing the water to run slowly over or against the sample and then stirring the whole with a spatula. Homogeneity is assessed visually. The products tested are:
1. gluten to which glycerol is added with an industrial mixer, whereafter each sample was again ground. (In the table: Su 1 (5% glycerol) and Su 2 (9% glycerol));
2. the same samples with additionally 6% guar gum (in the table Su 1g and Su 2g);
3. sieved fractions (< 250 µm) of Su 1 and Su 2 (in the table Su 1z and Su 2z); and
4. gluten without pre-treatment.
In the assessment, the lower the figure the worse the homogeneity of the suspension (1 is many lumps, 6 is homogeneous). The results are shown in table 8.

**Table 8**

| Assessment of instant products. | | | |
|---|---|---|---|
| Sample | Assessment | Sample | Assessment |
| Su 1 | 2 | Su 1g | 5 |
| Su 2 | 2 | Su 2g | 6 |
| Su 1z | 4 | Gluten control | 1 |
| Su 2z | 4 | | |

This experiment demonstrates that the instant properties of gluten products can be improved by adding guar gum and reducing the size of the gluten particles by grinding or sieving.

### EXAMPLE 8

### Arranging a coating on cheese.

After the brining bath, cheeses are normally treated a number of times with a commercially available emulsion of a synthetic polymer. Tests were made to find whether a gluten film can replace this synthetic coating layer.

In this experiment Gouda cheeses are used (48+, 5 kg each). These are coated with gluten suspensions which are prepared according to the basic formula with 13% glycerol and to which are added CMC (8%) or guar gum (8%). As control serves a cheese treated with a commercial product. Each cheese is coated a number of times in accordance with a treatment schedule used in practice. In each treatment the upper side of the cheese is coated with one of the suspensions. During the subsequent treatment the cheese is turned over and the other side coated. The suspensions are applied to the cheese surface by rubbing out with a tissue. The cheeses are stored during the experiments in a conditioned cell. The mean air speed herein is set at 0.14 m/s, the temperature at 13°C. The RAH is set at 85%.

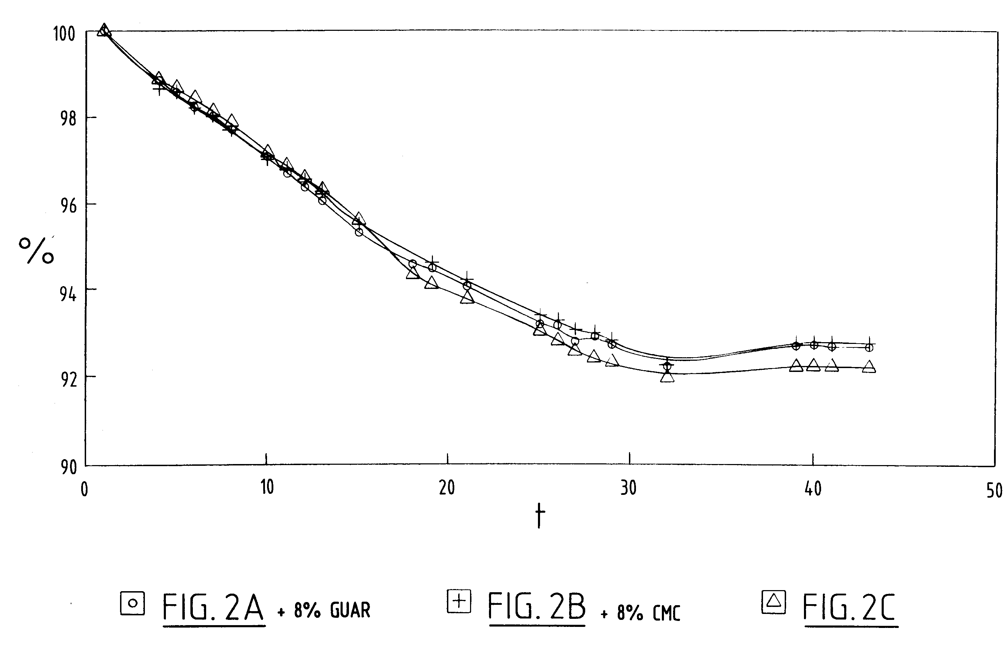

The gluten suspensions are found to form a continuous and homogeneous coating adhering well to the cheese. The rind development of cheese coated with gluten is comparable to that of cheese coated with the commercial product. The gluten film provides a non-shiny coating in contrast to the commercial product. Moisture loss of the cheeses coated with gluten corresponds with that of cheese coated with the commercial product. The results are shown in figure 2, wherein "%" represents weight relative to starting weight and "t" represents storage duration in days. Figures 2A, 2B and 2C show the curves for respectively gluten + 8% guar gum, gluten + 8% CMC and the commercial product.

The present invention therefore provides a method for manufacturing a foil or coating based on biodegradable, preferably edible materials. The foils and coatings according to the invention can be used for varying applications.

## Claims

1. Method of manufacturing a foil or coating based on unfractionated gluten, comprising the steps of:
a) preparing a suspension by adding unfractionated gluten, in a finely distributed way, to water which is continuously stirred;
b) spreading the obtained suspension on a support; and
c) removing the water from the suspension to obtain a continuous film.

2. Method as claimed in claim 1, **characterized in that** the suspension contains at least one additive.

3. Method as claimed in claim 2, **characterized in that** the additive is chosen from the group consisting of thickeners, plasticizers, acids, proteins, hydrophobic substances or combinations thereof.

4. Method as claimed in claim 3, **characterized in that** the thickener is selected from the group consisting of modified cellulose, such as carboxymethyl cellulose, or from other modified or non-modified polysaccharides such as locust bean gum, guar gum, gum arabic, xanthane gum, alginate, starch or combinations thereof.

5. Method as claimed in claim 4, **characterized in that** the thickener is guar gum and is added in a concentration of at least 2% by weight in relation to the protein.

6. Method as claimed in claim 3, **characterized in that** the plasticizer is chosen from the group consisting of fatty acids, fatty acid derivatives, phthalates, sebacates, citrates, high-molecular alcohols, triethanolamine, lactamides, phospholipids, mono-, di-, and oligosaccharides, acids, polyoles or derivatives thereof such as polyethylene glycol, polyethylene glycol esters, propylene glycol, glycerol, diglycerol, 1,2,6-hexanetriole, sorbitol, mannitol, saccharose, mono- and di-glycerides or combinations thereof.

7. Method as claimed in claim 6, **characterized in that** the plasticizer is glycerol and is added in a concentration between 0 and 45% (v/w), preferably between 5 and 30%.

8. Method as claimed in claim 3, **characterized in that** the proteins are chosen from the group consisting of the water-soluble proteins such as modified wheat gluten, casein, gelatin or combinations thereof, which are optionally made water-insoluble; water-insoluble vegetable proteins of the cereals maize, barley, rye and millet, of tuberous plants, such as for instance potatoes, of the pulses soya, peas, beans, broad beans, or combinations thereof; the animal proteins collagen, gelatin, lactoproteins, egg proteins and blood proteins, wherein the water-insoluble vegetable or animal proteins are naturally water-insoluble or made water-insoluble, or combinations of two or more of the above proteins.

9. Method as claimed in claim 3, **characterized in that** the acids are selected from the group consisting of inorganic acids such as hydrochloric acid, phosphoric acid, and organic acids such as lactic acid, citric acid or combinations thereof.

10. Method as claimed in claim 3, **characterized in that** the hydrophobic substances are chosen from the group consisting of oils, fats, waxes, emulsifiers or combinations thereof.

11. Method as claimed in any of the claims 1-10, **characterized in that** the water is removed by drying in air.

12. Method as claimed in any of the claims 1-11, **characterized in that** the suspension is spread onto an inert support by means of pouring in order to obtain a foil.

13. Method as claimed in any of the claims 1-11, **characterized in that** the support is a substrate onto which the suspension is applied by means of pouring, immersion, spraying, brushing or rubbing to obtain a coating on the substrate.

14. Foil based on unfractionated gluten, optionally in the presence of one or more additives and obtainable by means of the method as claimed in claim 12.

15. Coating based on unfractionated gluten, optionally in the presence of one or more additives and obtainable by means of the method as claimed in claim 13.

16. Instant mix for manufacturing therefrom a foil according to claim 14, or a coating according to claim 15, which instant mix is based on unfractionated gluten obtainable by means of the method of claim 1 - 13 and further comprises at least one thickener.

17. Instant mix as claimed in claim 16, comprising wheat gluten and guar gum as thickener, optionally in the presence of glycerol as the plasticizer.

## Patentansprüche

1. Verfahren zur Herstellung einer Folie oder Beschichtung basierend auf unfraktioniertem Gluten, das die folgenden Schritte umfaßt:
a) Herstellen einer Suspension durch Zugabe von unfraktioniertem Gluten in fein verteilter Art und Weise zu Wasser, das kontinuierlich gerührt wird,
b) Verteilen der erhaltenen Suspension auf einen Träger, und
c) Entfernen des Wassers aus der Suspension, wobei eine kontinuierliche Folie erhalten wird.

2. Verfahren nach Anspruch 1,
**dadurch gekennzeichnet**, daß die Suspension mindestens ein Additiv enthält.

3. Verfahren nach Anspruch 2,
**dadurch gekennzeichnet**, daß das Additiv ausgewählt ist aus der Gruppe bestehend aus Verdickungsmitteln, Weichmachern, Säuren, Proteinen, hydrophoben Substanzen oder Kombinationen davon.

4. Verfahren nach Anspruch 3,
**dadurch gekennzeichnet**, daß das Verdickungsmittel ausgewählt ist aus der Gruppe bestehend aus modifizierter Cellulose, wie Carboxymethylcellulose oder aus anderen modifizierten oder nicht-modifizierten Polysacchariden, wie Johannisbrotmehl, Guargum, Gummiarabikum, Xanthangum, Alginat, Stärke oder Kombinationen davon.

5. Verfahren nach Anspruch 4,
**dadurch gekennzeichnet**, daß das Verdickungsmittel Guargum ist und in einer Konzentration von mindestens 2 Gew.-%, bezogen auf das Protein zugesetzt wird.

6. Verfahren nach Anspruch 3,
**dadurch gekennzeichnet**, daß der Weichmacher ausgewählt ist aus der Gruppe bestehend aus Fettsäuren, Fettsäurederivaten, Phthalaten, Sebacaten, Citraten, hochmolekularen Alkoholen, Triethanolamin, Lactamiden, Phospholipiden, Mono-, Di- und Oligosacchariden, Säuren, Polyolen oder Derivaten davon, wie Polyethylenglycol, Polyethylenglycolestern, Propylenglycol, Glycerin, Diglycerin, 1,2,6-Hexantriol, Sorbitol, Mannitol, Saccharose, Mono- und Diglyceriden oder Kombinationen davon.

7. Verfahren nach Anspruch 6,
**dadurch gekennzeichnet,** daß der Weichmacher Glycerin ist und in einer Konzentration von zwischen 0 und 45% (Vol./Gew.) vorzugsweise zwischen 5 und 30% zugesetzt wird.

8. Verfahren nach Anspruch 3,
**dadurch gekennzeichnet,** daß die Proteine ausgewählt werden aus der Gruppe bestehend aus wasserlöslichen Proteinen, wie modifiziertem Weizengluten, Casein, Gelatine oder Kombinationen davon, die gegebenenfalls wasserunlöslich gemacht werden, wasserunlöslichen Gemüseproteinen der Cerealien Mais, Gerste, Roggen und Hirse, der Knollen-Pflanzen, wie beispielsweise Kartoffeln, der Hülsenfrüchte Soja, Erbsen, Bohnen, dicken Bohnen oder Kombinationen davon, den tierischen Proteinen Kollagen, Gelatine, Lactoproteinen, Eiproteinen und Blutproteinen, wobei die wasserunlöslichen Gemüse- oder tierischen Proteine natürlich wasserunlösliche oder wasserunlöslich gemachte Proteine oder Kombinationen von zwei oder mehreren der vorstehenden Proteine sind.

9. Verfahren nach Anspruch 3,
**dadurch gekennzeichnet,** daß die Säuren ausgewählt sind aus der Gruppe bestehend aus anorganischen Säuren, wie Chlorwasserstoffsäure, Phosphorsäure und organischen Säuren, wie Milchsäure, Zitronensäure oder Kombinationen davon.

10. Verfahren nach Anspruch 3,
**dadurch gekennzeichnet,** daß die hydrophoben Substanzen ausgewählt werden aus der Gruppe bestehend aus Ölen, Fetten, Wachsen, Emulgatoren oder Kombinationen davon.

11. Verfahren nach einem der Ansprüche 1 bis 10,
**dadurch gekennzeichnet,** daß das Wasser durch Trocknen an Luft entfernt wird.

12. Verfahren nach einem der Ansprüche 1 bis 11,
**dadurch gekennzeichnet,** daß die Suspension auf einen inerten Träger durch Gießen aufgebracht wird, um eine Folie zu erhalten.

13. Verfahren nach einem der Ansprüche 1 bis 11,
**dadurch gekennzeichnet,** daß der Träger ein Substrat ist, auf den die Suspension mittels Gießen, Eintauchen, Sprühen, Bürsten oder Reiben aufgebracht wird, um eine Beschichtung auf dem Substrat zu erhalten.

14. Folie, basierend auf unfraktioniertem Gluten, gegebenenfalls in Anwesenheit von einem oder mehreren Additiven und erhältlich mittels des Verfahrens nach Anspruch 12.

15. Beschichtung, basierend auf unfraktioniertem Gluten, gegebenenfalls in Anwesenheit von einem oder mehreren Additiven und erhältlich mittels des Verfahrens nach Anspruch 13.

16. Schnell lösliche Mischung zur Herstellung einer Folie gemäß Anspruch 14 oder einer Beschichtung gemäß Anspruch 15,
die auf unfraktioniertem Gluten basiert und mittels der Verfahren der Ansprüche 1 bis 13 erhältlich ist und weiter mindestens ein Verdickungsmittel enthält.

17. Schnell lösliche Mischung nach Anspruch 16,
welche als Verdickungsmittel Weizengluten und Guargum enthält, gegebenenfalls in Anwesenheit von Glycerin als Weichmacher.

## Revendications

1. Procédé de fabrication d'une feuille ou d'un revêtement a base d'un gluten non fractionné, comportant les étapes consistant :
a) à préparer une suspension en ajoutant du gluten non fractionné, sous une forme finement divisée, à de l'eau soumise à une agitation continue ;
b) à étaler sur un support la suspension obtenue ; et
c) à éliminer l'eau de la suspension pour obtenir un film continu.

2. Procédé selon la revendication 1, caractérisé en ce que la suspension contient au moins un additif.

3. Procédé selon la revendication 2, caractérisé en ce que l'additif est choisi parmi l'ensemble comprenant les épaississants, les plastifiants, les acides, la protéines, les substances hydrophobes ou leurs combinaisons.

4. Procédé selon la revendication 3, caractérisé en ce que l'épaississant est choisi parmi l'ensemble comprenant la cellulose modifiée, telle que la carboxyméthylcellulose, ou parmi d'autres polysaccharides modifiés ou non modifiés tels que la gomme de caroube, la gomme de guar, la gomme arabique, la gomme xanthane, les alginates, l'amidon ou leurs combinaisons.

5. Procédé selon la revendication 4, caractérisé en ce que l'épaississant est la gomme de guar et est ajouté à une concentration d'au moins 2 % en poids par rapport à la protéine.

6. Procédé selon la revendication 3, caractérisé en ce que le plastifiant est choisi parmi l'ensemble comprenant les acides gras, les dérivés d'acides gras, les phtalates, les sébaçates, les citrates, les alcools à grande masse moléculaire, la triéthanolamine, les lactamides, les phospholipides, les mono-, di- et oligosaccharides, les acides, les polyols ou leurs dérivés tels que le polyéthylèneglycol, les esters de polyéthylèneglycol, le propylèneglycol, le glycérol, le diglycérol, le 1,2,6-hexanetriol, le sorbitol, le mannitol, le saccharose, les mono- et diglycérides ou leurs combinaisons.

7. Procédé selon la revendication 6, caractérisé en ce que le plastifiant est le glycérol, et est ajouté en une concentration de 0 à 45 % (v/m), de préférence comprise entre 5 et 30 %.

8. Procédé selon la revendication 3, caractérisé en ce que les protéines sont choisies parmi l'ensemble comprenant les protéines solubles dans l'eau telles que le gluten de blé modifié, la caséine, la gélatine ou leurs combinaisons, qui éventuellement sont rendues insolubles dans l'eau, les protéines végétales insolubles dans l'eau des céréales que sont le maïs, l'orge, le seigle et le millet, des tubéreuses telles par exemple que la pomme de terre, des légumineuses telles que le soja, le pois, le haricot, la fève, ou leurs combinaisons ; les protéines animales que sont le collagène, la gélatine, les lactoprotéines, les protéines de l'oeuf et les protéines du sang, les protéines animales ou végétales insolubles dans l'eau étant alors naturellement insolubles dans l'eau ou rendues insolubles dans l'eau, des combinaisons d'au moins deux des protéines ci-dessus.

9. Procédé selon la revendication 3, caractérisé en ce que les acides sont choisis parmi l'ensemble comprenant les acides minéraux tels que l'acide chlorhydrique, l'acide phosphorique, et les acides organiques tels que l'acide lactique, l'acide citrique ou leurs combinaisons.

10. Procédé selon la revendication 3, caractérisé en ce que les substances hydrophobes sont choisies parmi l'ensemble comprenant les huiles, les graisses, les cires, les émulsifiants ou leurs combinaisons.

11. Procédé selon l'une quelconque des revendications 1 à 10, caractérisé en ce que l'eau est éliminée par séchage à l'air.

12. Procédé selon l'une quelconque des revendications 1 à 11, caractérisé en ce que la suspension est étalée sur un support inerte par coulée pour donner une feuille.

13. Procédé selon l'une quelconque des revendications 1 à 11, caractérisé en ce que le support est un substrat sur lequel la suspension est appliquée par coulée, au trempé, au pistolet, à la brosse, ou par frottement pour donner un revêtement sur le substrat.

14. Feuille à base de gluten non fractionné, éventuellement en présence d'un ou plusieurs additifs et pouvant être obtenue par le procédé selon la revendication 12.

15. Revêtement à base de gluten non fractionné, éventuellement en présence d'un ou plusieurs additifs et pouvant être obtenu par le procédé selon la revendication 13.

16. Préparation instantanée pour fabriquer à partir d'elle une feuille selon la revendication 14, ou un revêtement selon la revendication 15, où la préparation instantanée est à base de gluten non fractionné pouvant être obtenu par le procédé selon les revendications 1 à 13, et comprend en outre au moins un épaississant.

17. Préparation instantanée selon la revendication 16, comprenant du gluten de blé et de la gomme de guar en tant qu'épaississant, éventuellement en présence de glycérol servant de plastifiant.
